Europäisches Patentamt

European Patent Office

Office européen des brevets

(11) Veröffentlichungsnummer: **0 268 001**
**A2**

(12) **EUROPÄISCHE PATENTANMELDUNG**

(21) Anmeldenummer: 87100483.4

(22) Anmeldetag: 16.01.87

(51) Int. Cl.⁴ **B23B 27/00** , B23B 27/04 , B23B 27/06 , B23B 27/16

(30) Priorität: 20.11.86 DE 3639672

(43) Veröffentlichungstag der Anmeldung:
25.05.88 Patentblatt 88/21

(84) Benannte Vertragsstaaten:
AT BE CH DE ES FR GB GR IT LI LU NL SE

(71) Anmelder: **MONTANWERKE WALTER GMBH**
**Derendinger Strasse 53 Postfach 2049**
**D-7400 Tübingen 1(DE)**

(72) Erfinder: **Carl, Hans-Georg**
**Eglosheimer Strasse 7/2**
**D-7144 Asperg(DE)**
Erfinder: **Beuchler, Roland**
**Adolf-Schinzel-Strasse 1**
**D-7476 Höfendorf(DE)**

(74) Vertreter: **Rüger, Rudolf, Dr.-Ing. et al**
**Webergasse 3 Postfach 348**
**D-7300 Esslingen/Neckar(DE)**

(54) Wendeplattenbestücktes Drehwerkzeug zum Einstechen oder Gewindeschneiden.

(57) Ein wendeplattenbestücktes Drehwerkzeug zum Einstechen oder Gewindeschneiden, mit einem einen Schaft (2) aufweisenden Halter (1), an dem eine eine Wendeschneidplatte (10) aufnehmende Ausnehmung (3) ausgebildet ist, weist eine Klemmeinrichtung auf, durch die die an einer seitlichen Anlagefläche gehaltene Wendeschneidplatte gegen die Bodenfläche (4) der Ausnehmung und einen zugeordneten axialen Anschlag (7) lagefest verklemmbar ist. Die Klemmeinrichtung weist ein im Bereiche der Seitenfläche der Ausnehmung (3) angeordnetes und die Befestigungsbohrung (11) der als Lochplatte ausgebildeten Wendeschneidplatte (10) durchdringendes Klemmelement auf, während die um ihre Lochachse umschlagbare Wendeschneidplatte (10) an ihren beiden Stirnseiten, anschließend an einen geschliffenen Schneidenteil (16) eine Anschlagfläche (14) trägt, die sich lediglich über einen Teil der Stirnseitenhöhe erstreckt.

Fig. 1

## Wendeplattenbestücktes Drehwerkzeug zum Einstechen oder Gewindeschneiden

Die Erfindung betrifft ein wendeplattenbestücktes Drehwerkzeug zum Einstechen oder Gewindeschneiden, mit einem einen Schaft aufweisenden Halter, an dem eine eine Wendeschneidplatte aufnehmende Ausnehmung ausgebildet ist, deren Bodenfläche eine Auflagefläche und deren Seitenfläche eine Anlagefläche für die in Betriebsstellung hochkant stehende Wendeschneidplatte bildet, sowie mit einer Klemmeinrichtung, durch die die an der seitlichen Anlagefläche gehaltene Wendeschneidplatte gegen die Bodenfläche und einen zugeordneten axialen Anschlag lagefest verklemmbar ist.

Wendeplattenbestückte Drehwerkzeuge dieser Art sind in der Praxis in einer Reihe von Ausführungsformen bekannt. Sie sind durchweg derart ausgebildet, daß die in der Ausnehmung des Halters angeordnete ungelochte, hochkant stehende Wendeschneidplatte durch eine Klemm-oder Spannpratze gegen ihre Anlage-und Auflagefläche sowie gegen den axialen Anschlag angepreßt ist. Diese Klemm-oder Spannpratze behindert aber den freien Spanablauf von der Hauptschneide und ist bei einigen Ausführungsformen auch nicht einfach und sicher genug zu bedienen.

Daneben gibt es andere, zum Einstechen oder Gewindeschneiden dienende wendeplattenbestückte Drehwerkzeuge, bei denen die Wendeschneidplatte in Betriebsstellung nicht hochkant stehend, sondern flach liegend in einer auf der Oberseite des Halters angeordneten Ausnehmung verspannt ist. Zum Spannen der Wendeschneidplatte kann dabei entweder wieder eine die Wendeschneidplatte übergreifende Spann-oder Klemmpratze Verwendung finden, doch sind auch Ausführungsformen bekannt, bei denen eine als Lochplatte ausgebildete Wendeschneidplatte Verwendung findet, die an ihrer Befestigungsbohrung mittels einer durchgehenden Befestigungsschraube verspannt ist.

Die flachliegende Anordnung der scheibenförmigen Wendeschneidplatte bedingt eine verhältnismäßig komplizierte Gestalt der Wendeschneidplatte, die angeschliffene Fortsätze oder dergl. aufweisen muß, die eine durch die Profilform der zur erzeugenden Nut vorgegebene Ausbildung haben.

Bei den meisten der erwähnten Drehwerkzeuge sind darüber hinaus zur Aufnahme der zum Einstechen von Nuten und der zum Schneiden von Gewinden erforderlichen Wendeschneidplatten jeweils unterschiedliche Halter erforderlich, was in der Herstellung und in der Vorratshaltung unerwünscht und teuer ist.

Aufgabe der Erfindung ist es deshalb, ein wendeplattenbestücktes Drehwerkzeug zum Einstechen oder Gewindeschneiden zu schaffen, das bei einfacher Gestaltung der Wendeschneidplatten, ausgehend von identischen, für den jeweiligen Einsatzzweck jeweils nur entsprechend angeschliffenen Wendeschneidplattenrohlingen, mit dem gleichen Halter wahlweise für Einstech-oder Gewindeschneidarbeiten verwendet werden kann, wobei gleichzeitig eine einwandfreie, genau maßhaltige und sichere Spannung der Wendeschneidplatte mit einfachen Mitteln gewährleistet und eine unbehinderte Spanabfuhr sichergestellt sind.

Zur Lösung dieser Aufgabe ist das eingangs genannte wendeplattenbestückte Drehwerkzeug erfindungsgemäß dadurch gekennzeichnet, daß die Klemmeinrichtung ein im Bereiche der Seitenfläche der Ausnehmung angeordnetes und die Befestigungsbohrung der als Lochplatte ausgebildeten Wendeschneidplatte durchdringendes Klemmelement aufweist, daß die um ihre Lochachse umschlagbare Wendeschneidplatte an ihren beiden Stirnseiten anschließend an einen dem Einsatzzweck entsprechend profilierten geschliffenen Schneidenteil eine Anschlagfläche aufweist, die sich lediglich über einen Teil der Stirnseitenhöhe erstreckt, daß die Anschlagflächen auf den beiden Stirnseiten punktsymmetrisch bezüglich der Lochachse angeordnet sind und daß die Wendeschneidplatte mit ihrer Anschlagfläche gegen den axialen Anschlag angedrückt ist.

Die Wendeschneidplatte ist unabhängig von dem Schneidenteil an ihrer Auflagefläche und ihrer Anschlagfläche einwandfrei gespannt. Damit können in dem gleichen Halter die gleiche Grundform aufweisende Wendeschneidplatten wahlweise austauschbar verwendet werden, bei denen lediglich der Schneidenteil dem jeweiligen Einsatzzweck entsprechend gestaltet ist. Die Genauigkeit der Spannung ist immer unabhängig von dem Schneidenteil.

Das in die nach der ISO-Norm ausgebildete Befestigungsbohrung ragende Klemmelement der Befestigungseinrichtung gewährleistet einen von Spann-oder Klemmpratzen etc. unbehinderten Spanablauf, wobei auch die Oberseite des Halters ohne Rücksichtnahme auf die Erfordernisse einer Klemmeinrichtung für die Spanleitung und -führung zweckentsprechend gestaltet werden kann. Schließlich ist auch beim Wenden der Wendeschneidplatte eine gleichbleibende Maßhaltigkeit ohne besondere Vorkehrungen gewährleistet, weil die Lochplatte um ihre Lochachse umschlagbar und nicht um eine rechtwinklig zu der Lochachse verlaufende Hochquerachse wendbar ist.

In einer bevorzugten Ausführungsform ist jede Anschlagfläche eine ebene Fläche, die bei präzisionsgesinterten Hartmetallwendeplatten in der Regel keiner Bearbeitung bedarf.

Die Bodenfläche der Ausnehmung des Halters kann mit Vorteil in Querrichtung auf die Seitenfläche zu und mit dieser einen· spitzen Winkel einschließend geneigt sein, wobei die Wendeschneidplatte entsprechend geneigte Schmalseitenflächen aufweist. Auf diese Weise wird insbesondere bei größeren Wendeschneidplatten eine zusätzliche formschlüssige Halterung der Wendeschneidplatte im Bereiche der Auflagefläche der Ausnehmung erzielt, wobei gleichzeitig die Wendeschneidplatte durch die Schrägfläche an die Seitenfläche angedrückt wird. Bei kleineren Wendeschneidplatten erübrigen sich gegebenenfalls diese Maßnahmen, so daß die Schmalseitenflächen der Wendeschneidplatten ebene, auf den Breitseiten rechtwinklig stehende Flächen sind.

Die Schmalseitenflächen der Wendeschneidplatte können im Querschnitt auch dachförmig gestaltet sein, um damit eine wahlweise Verwendung in rechten oder linken Haltern zu ermöglichen.

Zweckmäßigerweise ist jede Anschlagfläche der Wendeschneidplatte gegenüber dem anschließenden Schneidenteil axial zurückgesetzt, wobei der axiale Anschlag über die Seitenfläche vorragend im Bereiche der Oberseite des Halters angeordnet sein kann, derart, daß er in der von der axial zurückgesetzten Anschlagfläche begrenzten Aussparung der Wendeschneidplatte im wesentlichen ganz aufgenommen ist, womit sich eine besonders gute Spanabfuhr ergibt.

Das Klemmelement der Klemmeinrichtung kann in einer einfachen Ausführungsform eine bekannte Klemmschraube sein, die durch die Befestigungsbohrung der Wendeschneidplatte ragend in eine entsprechende Gewindebohrung des Halters eingeschraubt ist. In einer bevorzugten Ausführungsform ist die Anordnung aber derart getroffen, daß die Klemmeinrichtung einen mit einem als Klemmelement wirkenden zapfenartigen Schenkel in die Befestigungsbohrung der Wendeschneidplatte ragenden Winkelhebel aufweist, der auf dem Grunde einer im Bereiche der Seitenfläche angeordneten Vertiefung schwenkbar gelagert ist und gegen dessen anderen Schenkel eine in eine entsprechende Gewindebohrung des Halters eingeschraubte Klemmschraube abgestützt ist. Der Winkelhebel ist bezüglich der die Wendeschneidplatte aufnehmenden Ausnehmung des Halters derart orientiert, daß die Wendeschneidplatte bei festgezogenem Winkelhebel gegen die Boden- und Seitenfläche der Ausnehmung sowie gegen deren axialen Anschlag angepreßt und damit lagerichtig fixiert ist.

Da die Wendeschneidplatte lediglich in der Befestigungsbohrung gespannt ist und keine störenden Klemmpratzen oder dergl. Teile vorhanden sind, kann in dem Halter ein in der Nähe des wirksamen Schneidenteiles der Wendeschneidplatte auf der Halteroberseite mündender Schmiermittelkanal ausgebildet sein. Insbesondere bei Drehwerkzeugen zum Innengewindeschneiden ist diese Maßnahme von Bedeutung, weil sie es gestattet, die in diesem Fall ansich kritische Späneabfuhr wesentlich zu erleichtern.

Bei dem neuen Drehwerkzeug können, wie bereits erläutert, identische Wendeschneidplattenrohlinge für das Gewindeschneiden und das Einstechen in dem gleichen Halter verwendet werden. Lediglich der Schneidenteil der Wendeschneidplatte muß entsprechend dem Einsatzzweck angeschliffen sein.

In der Zeichnung sind Ausführungsbeispiele des Gegenstandes der Erfindung dargestellt. Es zeigen:

Fig. 1 ein für Einstecharbeiten bestimmtes wendeplattenbestücktes Drehwerkzeug gemäß der Erfindung, in einer Seitenansicht,

Fig. 2 das Drehwerkzeug nach Fig. 1, in einer Draufsicht,

Fig. 3 das Drehwerkzeug nach Fig. 1, in einer stirnseitigen Ansicht,

Fig. 4 das Drehwerkzeug nach Fig. 1, mit einer für das Gewindeschneiden geeigneten Wendeplattenbestückung, in einer Draufsicht entsprechend Fig.2,

Fig. 5 das Drehwerkzeug nach Fig. 1, geschnitten längs der Linie V-V der Fig. 2, in einer Seitenansicht, im Ausschnitt und in einem anderen Maßstab,

Fig. 6 die Wendeschneidplatte des Drehwerkzeugs nach Fig. 1, in einer vergrößerten Seitenansicht,

Fig. 7 und 8 die Wendeschneidplatte nach Fig. 6, in einer Draufsicht bzw. einer stirnseitigen Ansicht,

Fig. 9 ein wendeplattenbestücktes Innendrehwerkzeug gemäß der Erfindung, mit einer Wendeplattenbestückung gemäß Fig. 1, in einer Draufsicht,

Fig.10 das Innendrehwerkzeug gemäß Fig.9 in einer Seitenansicht und im Ausschnitt,

Fig.11 das Innendrehwerkzeug nach Fig. 9, in einer stirnseitigen Ansicht, und

Fig.12 das Innendrehwerkzeug nach Fig.9, mit einer für Gewindeschneidarbeiten geeigneten Wendeplattenbestückung, in einer Draufsicht und im Ausschnitt.

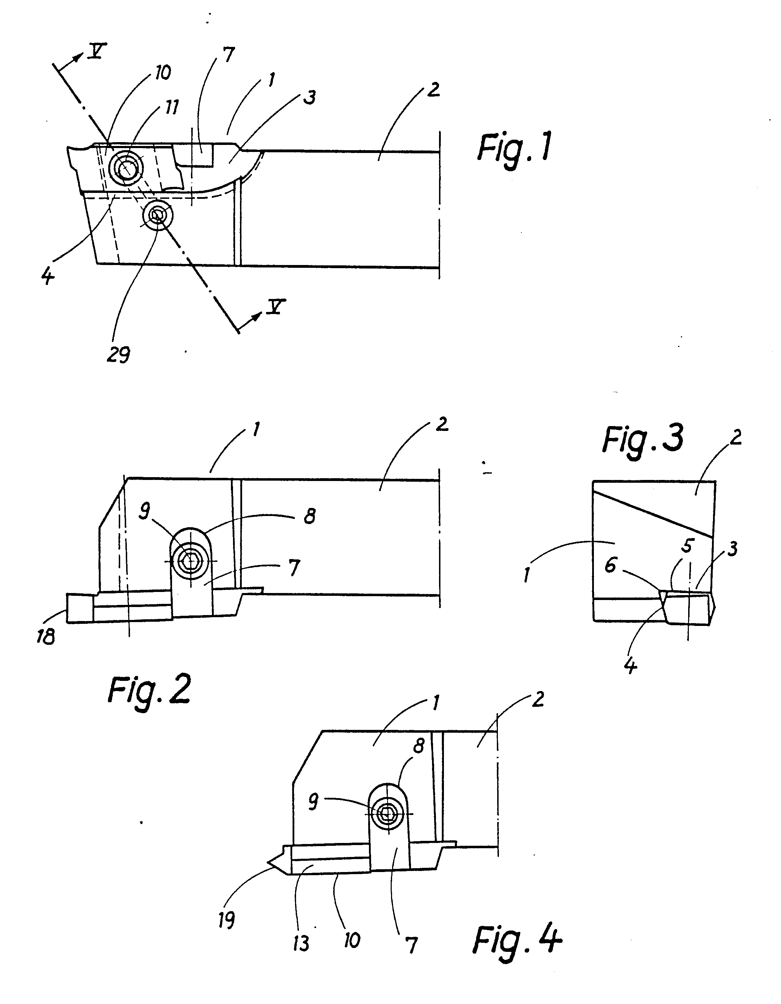

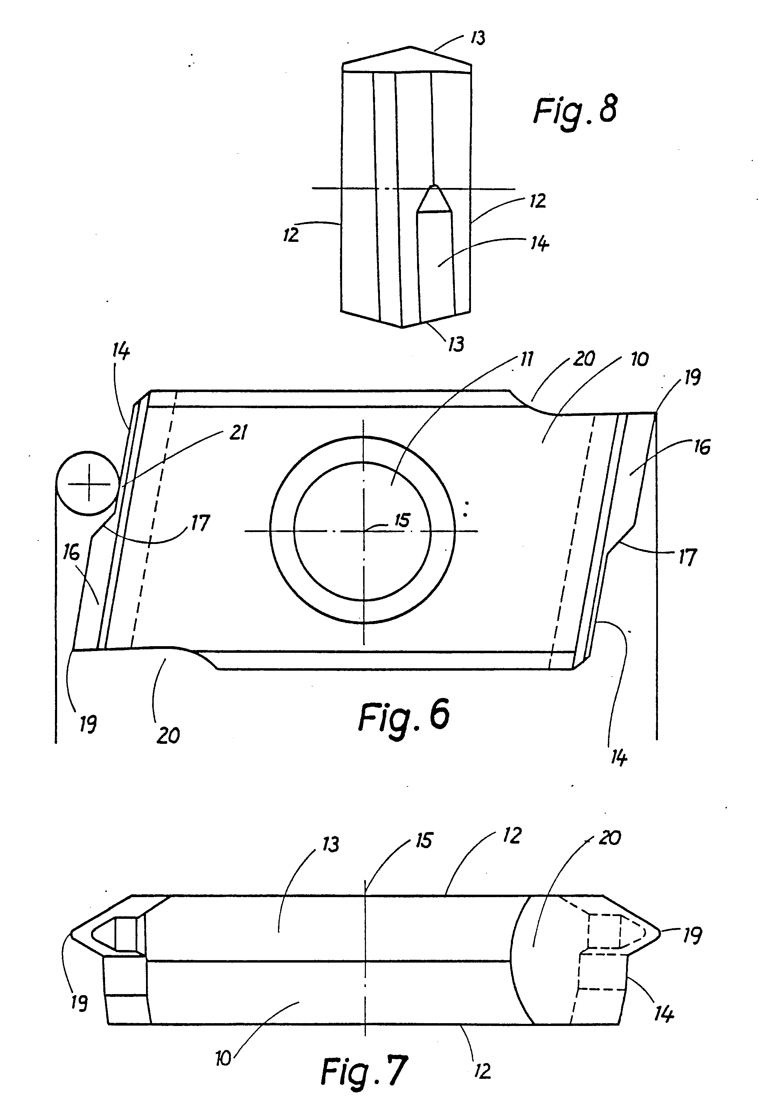

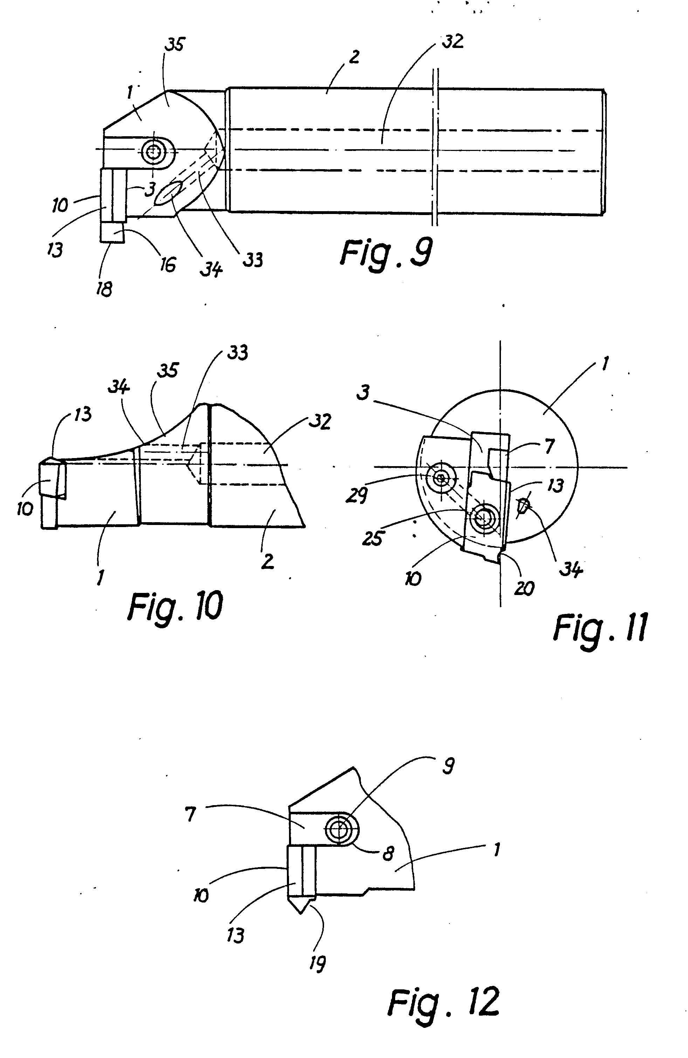

Das nach Art eines Stahlhalters ausgebildete Drehwerkzeug dient in den Ausführungsformen nach den Fig. 1 - 5 für die Außenbearbeitung und in den Ausführungsformen nach den Fig. 6 - 12 für die Innenbearbeitung. Es ist jeweils zum Einstechen von Nuten (Fig. 1,2 und Fig. 9,10) oder zum Gewindeschneiden (Fig. 4,12) bestimmt.

Das Drehwerkzeug weist jeweils einen Halter 1 auf, an den sich als Aufnahme ein Schaft 2 anschließt, der bei der Ausführungsform nach den Fig. 1 - 5 im Querschnitt quadratisch und bei der Ausführungsform nach den Fig. 6 - 12 zylindrisch ist.

An dem Halter 1 ist seitlich eine nutenartige Ausnehmung 3 angeordnet, die sich zu der Oberseite und der Stirnseite des Halters 1 hin öffnet und bei der Ausführungsform nach den Fig. 1 - 5 in der insbesondere aus den Fig. 2 - 4 ersichtlichen Weise an einer (hier der rechten) Seite des Halters 1 vorgesehen ist, während sie bei der Ausführungsform nach den Fig. 9 - 12 im Bereiche der Stirnseite des Halters 1 liegt.

Die Ausnehmung 3 weist in dem interessierenden Bereich eine im wesentlichen ebene Bodenfläche 4 und eine ebene Seitenfläche 5 auf. Die Bodenfläche 4 ist in Querrichtung auf die in einer Vertikalebene liegende Seitenfläche 5 zu geneigt, wobei sie mit dieser bei 6 einen spitzen Winkel in der Größenordnung von bspw. 75° einschließt. Rechtwinklig von der Seitenwand 5 abgehend ragt in die Ausnehmung 3 ein axialer Anschlag 7, der durch eine flache schienenförmige Anschlagleiste gebildet ist, die in eine entsprechende Vertiefung 8 auf der Oberseite des Halters 1 eingelassen und mittels einer Befestigungsschraube 9 festgeschraubt ist. Die Anschlaglasche fluchtet in der bspw. aus Fig.1 zu entnehmenden Weise oben mit der Oberseite des Halters 1.

In die Ausnehmung 3 ist hochkant stehend eine Wendeschneidplatte 10 eingesetzt, die im wesentlichen parallellogrammförmig ausgebildet und mit einer durchgehenden Befestigungsbohrung 11 entsprechend der ISO-Norm versehen ist. Die Figuren 6 - 8 zeigen, daß die aus Hartmetall präzisionsgesinterte Wendeschneidplatte 10 zwei parallele Breitseiten 12 aufweist und mit im Querschnitt dachförmig gestalteten parallelen Schmalseitenflächen 13 ausgebildet ist. Jede der Schmalseitenflächen 13 schneidet die benachbarte Breitseite 12 unter einem stumpfen Winkel, der der Neigung der Bodenfläche 4 der Ausnehmung 3 entspricht, so daß bei in die Ausnehmung 3 eingesetzter Wendeschneidplatte 10 deren eine Breitseite 10 satt an der zugeordneten Seitenfläche 5 der Ausnehmung 3 anliegt.

An den beiden Stirnflächen ist die Wendeschneidplatte 10 jeweils mit einer im wesentlichen rechtwinklig zu den beiden Breitseiten 12 verlaufenden Anschlagfläche 14 versehen, die, abhängig von der Herstellungsgenauigkeit der Wendeschneidplatte 10, bearbeitet oder unbearbeitet sein kann. Die beiden Anschlagflächen 14 sind in der aus Fig. 6 zu entnehmenden Weise bezüglich der bei 15 angedeuteten Lochachse der Wendeschneidplatte 10 punktsymmetrisch. Sie erstrecken sich, ausgehend von einer Schmalseitenfläche 13, lediglich über einen Teil der jeweils zugeordneten Stirnseitenhöhe und schließen sich jeweils an einen stirnseitig angeordneten Schneidenteil 16 an. Der Schneidenteil 16 ist dem jeweiligen Verwendungszweck entsprechend profiliert geschliffen, wobei die Anordnung derart getroffen ist, daß jede Anschlagfläche 14 gegenüber dem benachbarten Schneidenteil 16 axial zurückgesetzt ist (Fig.6), derart, daß sie zusammen mit einer schrägliegenden Übergangsfläche 17 eine randoffene Aussparung begrenzt. Bei der in Fig. 6 dargestellten Ausführungsform sind die Anschlagfläche 14 und die Stirnkante des zugeordneten Schneidenteils 16 zueinander im wesentlichen parallel, doch ist dies kein zwingendes Erfordernis. Die Kanten der beiden Schneidenteile 16 können für den jeweiligen Einsatzzweck entsprechend beliebig gestaltet werden.

Bei der Ausführungsform nach den Fig. 2,9 weist der Schneidenteil 16 eine im wesentlichen gerade Hauptschnittkante 18 auf, wie sie zum Einstechen parallelflankig begrenzter Nuten Verwendung finden kann; bei den Ausführungsformen nach den Fig. 4,7 und 12 ist der Schneidenteil 16 bei 19 spitzwinklig profiliert, wie dies für Gewindeschneidarbeiten erforderlich ist.

Im Bereiche der beiden Schmalseitenflächen 13 ist die Wendeschneidplatte 10 jeweils mit einer eingeschliffenen Spanleitnut 20 ausgebildet, die sich bis zu der Hauptschneide 18 bzw. 19 erstreckt.

Die Wendeschneidplatte 10 ist ersichtlich um ihre Lochachse 15 umschlagbar. Um die Umschlaggenauigkeit der Wendeschneidplatte 10 zu gewährleisten, ist die Längenvermaßung der Wendeschneidplatte derart gewählt, daß der Vermaßungspunkt 21 (Fig. 6) und der Anlagepunkt der Wendeschneidplatte an dem Anschlag 7 des Halters 1 identisch sind.

Bei in die Ausnehmung 3 eingesetzter Wendeschneidplatte 10 liegt diese mit ihrer Anschlagfläche 14, wie erwähnt, an dem Anschlag 7 an, der dabei in der von der zurückgesetzten Anschlagfläche 14 gebildeten Aussparung aufgenommen ist, so daß sich (vergl. Fig.1) eine von der Spanleitnut 20 aus im wesentlichen eben durchgehende, ununterbrochene Spanleitfläche auf der Oberseite des Halters 1 ergibt. An der Wendeschneidplatte 10 brauchen lediglich die beiden einander gegenüberliegenden Schmalseitenflächen 13 genau bearbeitet zu sein, um beim Umschlagen eine exakt reproduzierbare Lage der Hauptschneiden 18 bzw. 19 zu bekommen. Wie bereits erwähnt, ist die Gestaltung der Schneidenteile 16 ohne Einfluß auf die lagerichtige Fixierung der Wendeschneidplatte in der Ausnehmung 3, die in Achsrichtung lediglich durch das Zusammenwirken des Anschlages 7 mit der benachbarten Anschlagfläche 14 gewährleistet ist. Beide Breitseiten 12 sind als maßgenaue Anschlagflächen (für die Seitenfläche 5) ausgebildet.

Die Wendeschneidplatten 10 können, wie beispielsweise aus Fig. 6 abzulesen, ausgehend von dem jeweils gleichgestalteten Rohling, an ihrem Schneidenteil 16 dem Einsatzzweck entsprechend geschliffen werden, so daß für alle Einsatzzwecke lediglich ein einziger Halter 1 erforderlich ist. Die im Querschnitt dachartige Gestaltung der Schmalseitenflächen 13 gestattet eine wahlweise Verwendung der Wendeschneidplatten für rechte oder linke Halter.

Die Befestigung der Wendeschneidplatte 10 in der Ausnehmung 3 kann in einfachen Fällen durch eine Befestigungsschraube erfolgen, die in eine mit der Befestigungsbohrung 11 fluchtende Gewindebohrung des Halters 1 eingeschraubt wird.

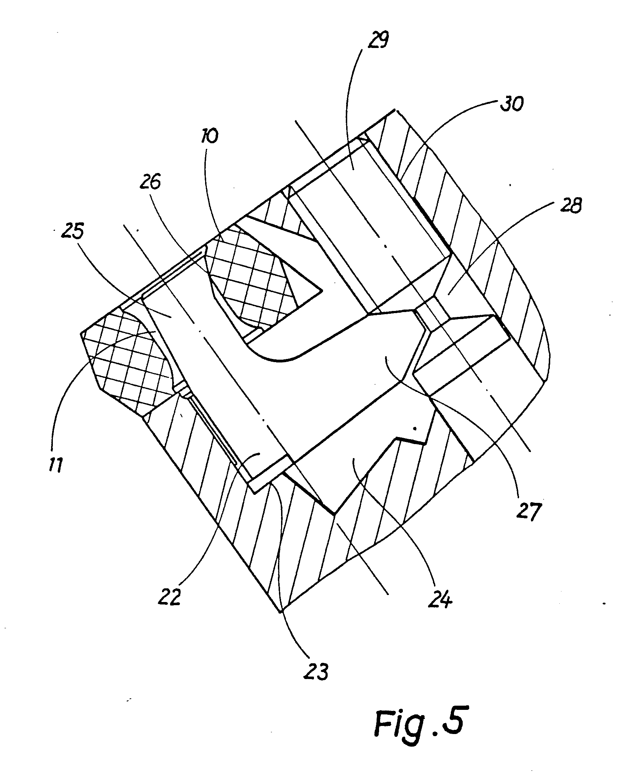

Bei den dargestellten Ausführungsformen weist die Klemmeinrichtung einen insbesondere aus Fig. 5 ersichtlichen Winkelhebel 22 auf, der bei 23 in der Nähe seiner Ecke auf einer zugeordneten Auflagefläche auf dem Grunde einer Vertiefung 24 begrenzt verschwenkbar abgestützt ist, die anschließend an die Seitenfläche 5 der Ausnehmung 3 in dem Halter 1 ausgebildet ist. Der Winkelhebel 22 ragt mit einem als Klemmelement wirkenden zapfenartigen Schenkel 25 in die Befestigungsbohrung 11 der Wendeschneidplatte 10, wobei er gegen deren Berandung über eine auf seiner Innenseite angeordnete,endseitig liegende Kegelfläche 26 abgestützt ist. Der andere Schenkel 27 des Winkelhebels 22 greift in eine Nut 28 einer Klemmschraube 29 ein, die in eine entsprechende Gewindebohrung 30 des Halters 1 eingeschraubt ist.

Wie bspw. aus Fig. 1 hervorgeht, ist der Winkelhebel 22 bezüglich der Ausnehmung 3 derart orientiert, daß er mit seiner Symmetrieebene in einer die Ausnehmung 3 durchquerenden Ebene liegt, die die Bodenfläche 4 der Ausnehmung 3 unter einem spitzen Winkel schneidet und rechtwinklig auf der Seitenfläche 5 steht. Beim Festziehen der Klemmschraube 29 wird der Winkelhebel 22, bezogen auf Fig. 5, im Uhrzeigersinn um seine Auflagefläche bei 23 verschwenkt, mit dem Ergebnis, daß die Wendeschneidplatte 10 wegen der erwähnten Ausrichtung des Winkelhebels 22 sowohl in Achsrichtung, bezogen auf Fig. 1 nach rechts, gegen den Anschlag 7, als auch rechtwinklig dazu gegen die Bodenfläche 4 der Ausnehmung 3 angepreßt wird. Die Konusfläche 26 bewirkt, daß die Wendeschneidplatte 10 außerdem mit ihrer innenliegenden Breitseite 12 ganzflächig gegen die Seitenfläche 5 der Ausnehmung 3 angepreßt wird.

Bei der in den Fig. 6 - 12 dargestellten Ausführungsform eines Innendrehwerkzeuges gelten bezüglich der Ausbildung der Wendeschneidplatte 10 und deren Halterung in der Ausnehmung 3 die gleichen Verhältnisse, wie sie im Vorstehenden anhand der Fig. 1 - 5 erläutert wurden. Gleiche Teile sind mit gleichen Bezugszeichen versehen, so daß sich eine nochmalige Erklärung erübrigt.

In dem Schaft 2 ist bei dieser Ausführungsform eine der Schmiermittelzuführung dienende Längsbohrung 32 ausgebildet, von der endseitig ein in dem Halter 1 verlaufender Schmiermittelzuführkanal 33 abzweigt, der bei 34 auf der Halteroberseite in der Nähe der Hauptschneide 18 der Wendeschneidplatte 10 mündet. Über den Schmiermittelzufuhrkanal 33 können Schmier-oder Kühlmittel oder gegebenenfalls auch Druckluft in den Schnittbereich eingeführt werden, um dort insbesondere einen einwandfreien Späneabtransport zu gewährleisten. Der Halter 1 ist im übrigen auf seiner Oberseite mit einer gekrümmten Spanleitfläche 35 ausgebildet, die stirnseitig an die obenliegende Schmalseitenfläche 13 der Wendeschneidplatte 10 anschließt.

## Ansprüche

1. Wendeplattenbestücktes Drehwerkzeug zum Einstechen oder Gewindeschneiden, mit einem einen Schaft aufweisenden Halter, an dem eine eine Wendeschneidplatte aufnehmende Ausnehmung ausgebildet ist, deren Bodenfläche eine Auflagefläche und deren Seitenfläche eine Anlagefläche für die in Betriebsstellung hochkant stehende Wendeschneidplatte bildet, sowie mit einer Klemmeinrichtung, durch die die an der seitlichen Anlagefläche gehaltene Wendeschneidplatte gegen die Bodenfläche und einen zugeordneten axialen Anschlag lagefest verklemmtar ist, dadurch gekennzeichnet, daß die Klemmeinrichtung ein im Bereiche der Seitenfläche (5) der Ausnehmung (3) angeordnetes und die Befestigungsbohrung (11) der als Lochplatte ausgebildeten Wendeschneidplatte (10) durchdringendes Klemmelement (25) aufweist, daß die um ihre Lochachse (15) umschlagbare Wendeschneidplatte (10) an ihren beiden Stirnseiten anschließend an einen dem einsatzzweck entsprechend profilierten geschliffenen Schneidenteil (16) eine Anschlagfläche (14) aufweist, die sich lediglich über einen Teil der Stirnseitenhöhe erstreckt, daß die Anschlagflächen (14) auf den beiden Stirnseiten punktsymmetrisch bezüglich der Lochachse (15) angeordnet sind und daß die Wendeschneidplatte (10) mit einer Anschlagfläche (14) gegen den axialen Anschlag (7) angedrückt ist.

2. Drehwerkzeug nach Anspruch 1, dadurch gekennzeichnet, daß jede Anschlagfläche (14) eine ebene Fläche ist.

3. Drehwerkzeug nach Anspruch 1 oder 2, dadurch gekennzeichnet, daß die Bodenfläche (4) der Ausnehmung (3) in Querrichtung auf die Seitenfläche (5) zu und mit dieser einen spitzen Winkel (6) einschließend geneigt ist und die Wendeschneidplatte (10) entsprechend geneigte Schmalseitenflächen (13) aufweist.

4. Drehwerkzeug nach Anspruch 3, dadurch gekennzeichnet, daß die Schmalseitenflächen (13) im Querschnitt dachförmig gestaltet sind.

5. Drehwerkzeug nach einem der vorhergehenden Ansprüche, dadurch gekennzeichnet, daß jede Anschlagfläche (14) gegenüber dem anschließenden Schneidenteil (16) axial zurückgesetzt ist.

6. Drehwerkzeug nach einem der vorhergehenden Ansprüche, dadurch gekennzeichnet, daß der axiale Anschlag (7) über die Seitenfläche (5) vorragend im Bereiche der Oberseite des Halters (1) angeordnet ist.

7. Drehwerkzeug nach einem der vorhergehenden Ansprüche, dadurch gekennzeichnet, daß die Klemmeinrichtung einen mit einem als Klemmelement wirkenden zapfenartigen Schenkel (25) in die Befestigungsbohrung (11) der Wendeschneidplatte (10) ragenden Winkelhebel (22) aufweist, der auf dem Grunde einer im Bereiche der Seitenfläche (5) angeordneten Vertiefung (24) schwenkbar gelagert ist und gegen dessen anderen Schenkel (27) eine in eine entsprechende Gewindebohrung (30) des Halters (1) eingeschraubte Klemmschraube (29) abgestützt ist.

8. Drehwerkzeug nach einem der vorhergehenden Ansprüche, dadurch gekennzeichnet, daß in dem Halter (1) ein in der Nähe des wirksamen Schneidenteils (18, 19) der Wendeschneidplatte (10) auf der Halteroberseite mündender Schmiermittelkanal (33) ausgebildet ist.

9. Wendeschneidplatte zur Bestückung eines Drehwerkzeuges nach einem der vorhergehenden Ansprüche, dadurch gekennzeichnet, daß sie eine im wesentlichen parallellogrammförmige Gestalt mit zwei parallelen Breitseiten (12) aufweist, die rechtwinklig zu der Achse (15) der durchgehenden Befestigungsbohrung (11) verlaufen, daß sie auf beiden Stirnseiten anschließend an einen dem Einsatzzweck entsprechend profiliert geschliffenen Schneidenteil (16) jeweils eine Anschlagfläche (14) aufweist, die sich lediglich über einen Teil der Stirnseitenhöhe erstreckt und gegenüber dem Schneidenteil (16) axial zurückgesetzt ist, daß die Anschlagflächen (14) zu der Lochachse (15) punktsymmetrisch angeordnet sind und daß die beiden quer zu den Anschlagflächen (14) verlaufenden Schmalseitenflächen (13) als parallele, maßgenaue Auflageflächen ausgebildet sind.

10. Wendeschneidplatte nach Anspruch 9, dadurch gekennzeichnet, daß die Schmalseitenflächen (13) jeweils mit zumindest einer der anschließenden Breitseiten (12) einen stumpfen Winkel einschließt.

11. Wendeschneidplatte nach Anspruch 9 oder 10, dadurch gekennzeichnet, daß beide der Breitseiten (12) als maßgenaue Anschlagfläche ausgebildet sind.

Fig.1

Fig.2

Fig.3

Fig.4

Fig.5

*Fig.8*

*Fig.6*

*Fig.7*

0 268 001

Fig. 9

Fig. 10

Fig. 11

Fig. 12